# EUROPEAN PATENT APPLICATION

(11) **EP 3 574 787 A1**
(43) Date of publication of application: **04.12.2019**
(21) Application number: 18744753.7
(22) Date of filing: 24.01.2018
(51) Int. Cl.: A43B 13/12, A43B 13/00

(54) **SOLE STRUCTURE**

(30) Priority: 25.01.2017 CN 201720101836 U
(71) Applicant: Qingyuan Global Technology Services Ltd., Qingyuan City, Guangdong 51180 (CN)
(72) Inventor: LUH, Yih Ping, Taipei 104 (TW)
(74) Representative: dompatent von Kreisler Selting Werner - Partnerschaft von Patent- und Rechtsanwälten mbB
(86) International application number: PCT/CN2018/073974
(87) International publication number: WO 2018/137649

(57) **Abstract**

This invention provides a sole structure including an outsole, a carbon fiber sheet and a midsole. The outsole essentially comprises, from top to bottom, an upper rubber layer, an intermediate fabric and a lower rubber layer. The carbon fiber sheet is disposed on the outsole and comprises a base, a lateral bending portions, and a rear bending portion. The intermediate fabric is disposed on the carbon fiber sheet. Two sides of the lateral bending portions bend from the base towards the intermediate fabric and towards each other. The rear bending portion bends from the base towards the intermediate fabric and the lateral bending portions.

## Description

### BACKGROUND OF THE INVENTION

### 1. Field of the Invention

This invention provides a sole structure, in particular a sole structure with shock resistance.

### 2. Description of the Prior Art

As technology develops, functions of shoes improve rapidly. For example, depending on different occasions, basketball shoes, running shoes, casual sneakers, etc. may be selected.

Sneakers nowadays adopt air cushions for shock resistance. By pumping, in ways such as high pressure, gas into tough synthetic rubber. The volume of special macromolecular gas is larger than the slight slits of the synthetic rubber, causing the gas in the air cushion not to flow out. The gas molecules absorb external shock and impact, giving rise to the shock resistance of the sneakers.

However, special requirements for the material of the rubber and the fact that the gas has to be pumped in evenly cause the technology to be complicated and to come with tremendous difficulties.

### SUMMARY OF THE INVENTION

In the light of the above, it is this invention's objective to provide a sole structure with shock resistance. The sole structure includes an outsole, a carbon fiber sheet and an midsole. The sole structure essentially comprises an upper rubber layer.

In an embodiment, the outsole comprises, from top to bottom, an upper rubber layer, an intermediate fabric, and a lower rubber layer.

In one embodiment, the intermediate fabric includes a first intermediate portion and a second intermediate portion, the first intermediate portion and the second fabric are spaced apart by a first distance. The first intermediate portion corresponds to a front end of the carbon fiber sheet, the second intermediate portion corresponds to a rear end of the carbon fiber sheet.

In one embodiment, the lower rubber layer includes a first rubber portion, a second rubber portion and a third rubber portion, the first rubber portion and the second rubber portion are spaced apart by a second distance, the second rubber portion and the third rubber portion are spaced apart by a third distance, the first rubber portion corresponds to an front portion of the first intermediate portion, the second rubber portion corresponds to a rear portion of the first intermediate portion, the third rubber portion corresponds to the second intermediate portion, the third distance corresponds to the first distance.

In one embodiment, the second distance is less than the third distance.

In one embodiment, the second distance substantially corresponds to a middle portion of the first intermediate portion.

In one embodiment, the first rubber portion has a first sidewall, the second rubber portion has a second sidewall, the third rubber portion has a third sidewall.

In one embodiment, the first sidewall extends upward from two sides of the first rubber portion and is partly connected, the second sidewall extends upward from two sides of the second rubber portion and is partly connected, the third sidewall extends upward from two sides of the third rubber portion and is partly connected.

In one embodiment, the first sidewall at least partially covers the front portion of the first intermediate portion, the second sidewall at least partially covers the rear portion of the first intermediate portion, and the third sidewall at least partially covers the lateral bending portions and the rear bending portion.

In one embodiment, the lateral bending portions substantially corresponds to a middle-rear end of the midsole.

In one embodiment, the rear bending portion substantially corresponds to a rear end of the midsole.

Comparing to existing technology, this invention provides a sole structure that is easier to produce and possesses better shock resistance.

### BRIEF DESCRIPTION OF THE DRAWINGS

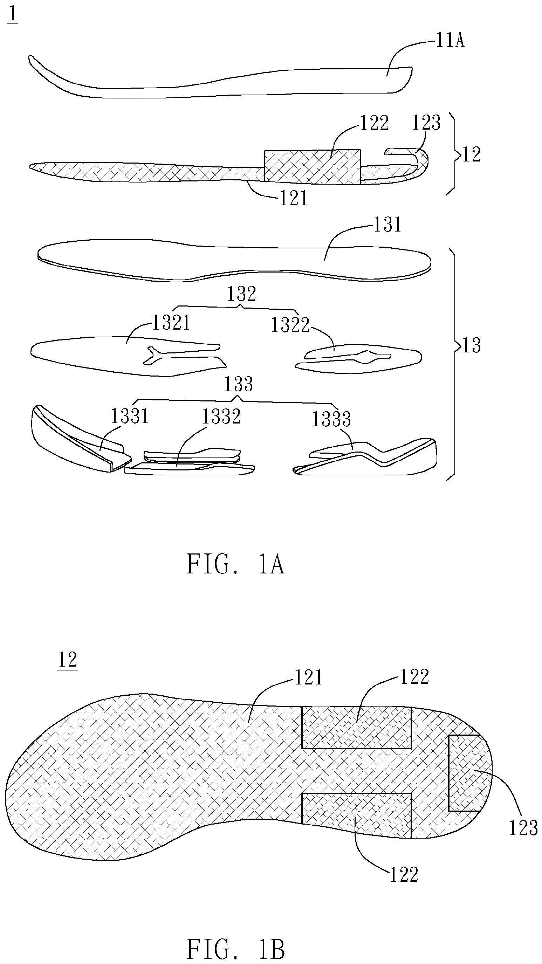

FIG. 1A is an exploded view of a first embodiment of the optical keyswitch of the invention.
Figure 1A illustrates an exploded view in accordance with an embodiment of this invention.
Figure 1B illustrates the top view in accordance with one embodiment of this invention.
Figure 2 illustrates an exploded view in accordance with another embodiment of this invention.
Figure 3A illustrates an example sole structure that is applied to an upper in accordance with one embodiment of this invention.
Figure 3B is the back view in accordance with the embodiment of Figure 3A.

### DETAILED DESCRIPTION OF THE PREFERRED EMBODIMENT

Several embodiments will be described with reference to the drawings. For clarity, some details will be described alongside. However, it should be understood that these details are not to limit this invention. Moreover, for simplicity, some common structures and components are illustrated schematically in the drawings.

Refer to Figure 1A and Figure 1B, sole structure 1 includes midsole 11A, carbon fiber sheet 12 and outsole 13. Midsole 11A is preferably made from elastic material, said elastic material is preferably but not limited to Thermoplastic Polyester Elastomer, Thermoplastic Polyurethane or the compound of both, having excellent ductility, heat resistance, etc. Outsole 13 comprises, from top to bottom, upper rubber layer 131, intermediate fabric 132, and lower rubber layer 133. The material of intermediate fabric 132 is preferably but not limited to Fiber Glass Reinforced Plastics. Carbon fiber sheet 12 is disposed on outsole 13 and is preferably but not limited to elastic carbon fiber sheet, having base 121, lateral bending portions 122, and rear bending portion 123. Midsole 11A is preferably disposed on top of lateral bending portions 122 and rear bending portion 123 of carbon fiber sheet 12.

Wherein lower rubber layer 133 has sidewall (the portion of lower rubber layer 133 that extends vertically from its sides in the drawing). ∘Sidewall may be connected to the upper of the shoe by seaming, joining, bonding, or other similar means. The sole structure of this embodiment is preferably but not limited to basketball shoes.

Detailedly, carbon fiber sheet 12 comprises base 121, lateral bending portions 122 and rear bending portion 123. Observed from its cross-section, carbon fiber sheet 12 essentially appears in a C-shape. Two sides of lateral bending portions 122 extend from the left side and the right side of base 121 towards midsole 11A and towards each other. Rear bending portion 123 extends from base 121 towards midsole 11A and towards lateral bending portions 122. Essentially a shock resistant structure formed by elastic force generated by elastic carbon fiber being bent. However, in other embodiments, lateral bending portions 122 and rear bending portion may also extend in the opposite direction, i.e., two sides of lateral bending portions 122 may bend from the left side and the right side of base 121 towards outsole 13 and towards each other, rear bending portion 123 may bend from base 121 towards outsole 13 and towards lateral bending portions 122.

Lateral bending portions 122 substantially corresponds to the middle-rear portion of the midsole 11A, rear bending portion 123 substantially corresponds to a rear end of the midsole 11A. In practical implementation, lateral bending portions 122 substantially corresponds to arch of human foot; while rear bending portion substantially corresponds to heel.

In this embodiment, intermediate fabric 132 is preferably a fabric of a grid structure, woven in ways that are not limited. Wherein the size of each grid element ranges from but is not limited to 0.2mm to 4mm. Moreover, upper rubber layer 131 is hot pressed to penetrate through the grid structure of intermediate fabric 132 and bond with lower rubber layer 133 to form outsole 13. By this, this invention possesses better toughness, unlike usual thin rubber which tears easily.

Midsole 11A is preferably but not limited to bond to carbon fiber sheet 12. It should be noted that carbon fiber sheet 12 may or may not bond to outsole 13. Specifically, carbon fiber 12 is disposed over upper rubber layer 131, and carbon fiber sheet 12 preferably may be adhered/bonded or not adhered/bonded to upper rubber layer 131. Wherein the upper rubber layer 131 is preferably bonded to carbon fiber sheet 12A with binder, but is not limited to this. In other embodiments, rubber sheet 131 may be bonded to carbon fiber sheet 12A through press bonding or injection.

When the wearer bends and/or jumps, because upper rubber layer 131 is not bonded to carbon fiber sheet 12, carbon fiber sheet 12 will not bend alongside outsole 13. At this time, stress caused by bending and/or jumping takes place on carbon fiber sheet12, and buffering stress takes place on midsole 11A, increasing the general elasticity of the shoe and providing buffering effects.

In this embodiment, intermediate fabric 132 preferably comprises first midsole fabric 1321 and second intermediate portion which are separated from each other. The distance between first intermediate portion 1321 and second intermediate portion 1322 is referred to hereinafter as first distance. First intermediate portion is disposed in a position that substantially corresponds to a front end of carbon fiber sheet 12 and substantially corresponds to the foot of the wearer; second intermediate portion 1322 is disposed in a position that substantially corresponds to a rear end of the carbon fiber sheet 12 and substantially corresponds to the heel of the wearer; the first distance at least partly corresponds to lateral bending portions 122 of the carbon fiber sheet 12 and substantially corresponds to the arch of the wearer's foot.

Lower rubber layer 133 preferably comprises first rubber portion 1331, second rubber portion 1332 and third rubber portion 1333, which are separated from each other. First rubber portion 1331 and second rubber portion 1332 ate spaced apart by a second distance, third rubber portion 1333 and second rubber portion 1332 are spaced apart by a third distance. First rubber portion 1331 is disposed in a position that corresponds to an front portion of the intermediate fabric 1321, second rubber portion 1332 is disposed in a position that corresponds to a rear portion of the first intermediate portion 1321, third rubber portion 1333 is disposed in a position that corresponds to the second midsole 1322, the third distance corresponds to the first distance. The second distance is preferably less than the third distance, and corresponds substantially to a middle portion of the first intermediate portion 1321.

Refer again to Figure 1A, first rubber portion 1331 has a first sidewall (the portion of first rubber portion 1331 that extends vertically from its sides), second rubber portion 1332 has a second sidewall. Third rubber 1333 portion has a third sidewall. The first sidewall, the second sidewall and the third sidewall may be connected to the upper of the shoe by seaming, joining, or bonding.

Wherein the first sidewall preferably extends from two sides of first rubber portion 1331 upward and towards each other, the first sidewall can be deemed as connecting correspondingly to the position of the tiptoe of the wearer (i.e. surrounding the wearer's tiptoe). The first sidewall at least partially covers the front portion of the first intermediate portion 1321 ; the second sidewall extends from two sides of the second rubber portion 1332 upward and at least partially covers the rear portion of the first intermediate portion 1321; the third sidewall preferably extends from two sides of the third rubber portion 1333 upward and is partly connected, the third sidewall can be deemed as connecting correspondingly to the heel of the wearer (i.e. surrounding the heel of the wearer), the third sidewall at least partially covers the lateral bending portions 122 and rear bending portion 123.

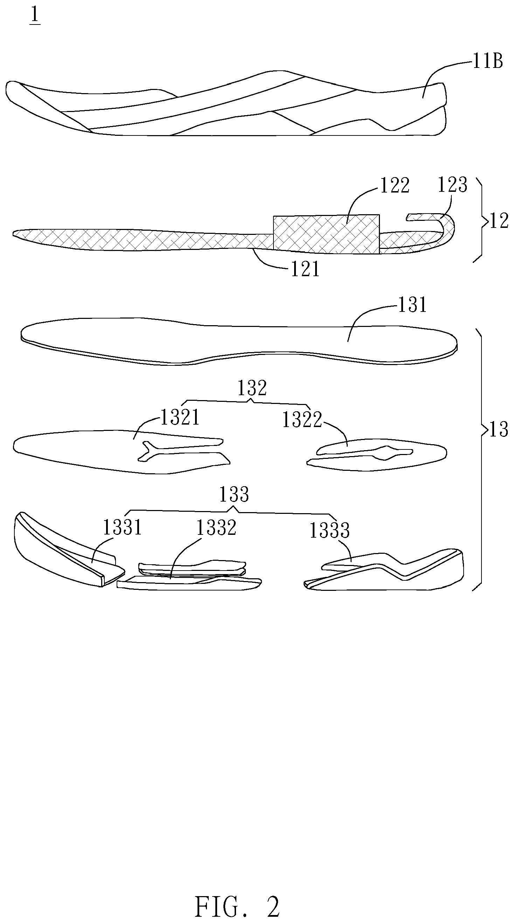

This invention provides another embodiment, refer to Figure 2, sole structure 1 is essentially the same with the embodiment described above, the difference is that the midsole 11B in this embodiment is made from Ethylene Vinyl Acetate, which gives the sole structure rigidity resembling that of plastic material, and elasticity resembling that of rubber material, and complies with environmental protection requirements. Other details are not repeated here.

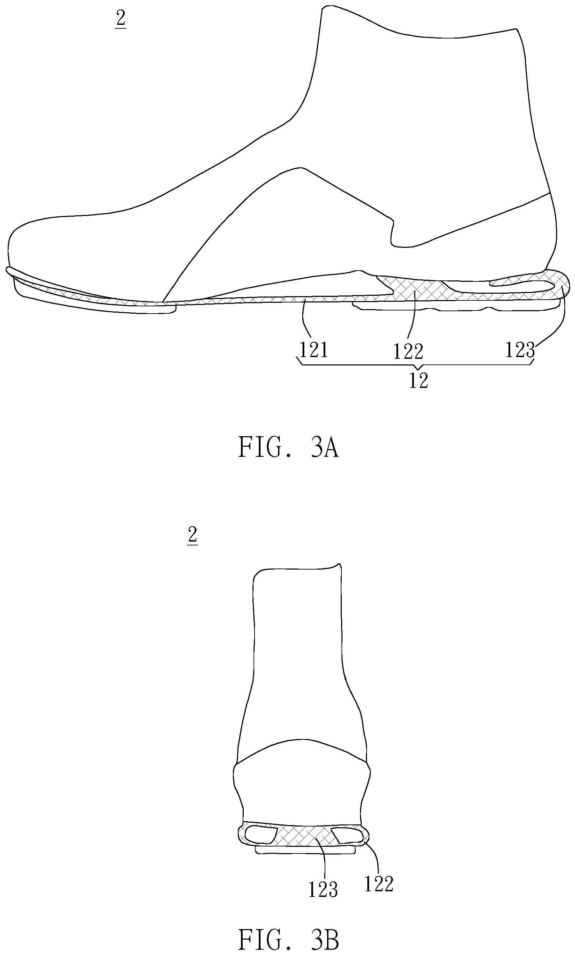

Refer to Figure 3A and Figure 3B. Figure 3A and Figure 3B illustrates another embodiment of this invention. Shoe 2 is formed by combining the sole structures described in the embodiments above with upper. Shoe 2 preferably may be but is not limited to basketball shoe.

In comparison to existing art, this invention provides a sole structure that is easier to produce and has better shock resistance.

Through the detailed description above, the features and spirit of this invention should have been described with clarity. But the features and spirit of this invention shall not be limited by the detailed description. On the contrary, variations and equivalent arrangements should be within the coverage of the scope of the claims of this invention. As a result, the scope of the claims of this invention should be interpreted in the broadest way to cover all the variations and equivalent arrangements.

## Claims

1. A sole structure 1, comprising:
an outsole 13 having a sidewall;
a carbon fiber sheet 12 disposed on the outsole13, the carbon fiber sheet 12 having a base 121, two lateral bending portions122, and a rear bending portion123; and
a midsole 11A disposed on the lateral bending portions 122and rear bending portion123,
wherein the two lateral bending portions 122 bend from two sides of the base 121 towards the midsole 11A and extend towards each other, and the rear bending portion 123 bends from the base 121 towards the midsole 11A and extends toward the lateral bending portions122.

2. The sole structure of claim 1, wherein the outsole 13 comprises, from top to bottom, an upper rubber layer 131, an intermediate fabric 132, and a lower rubber layer 133.

3. The sole structure of claim 2, wherein the intermediate fabric 132 includes a first intermediate portion 1321 and a second intermediate portion 1322 spaced apart by a first distance; the first intermediate portion 1321 corresponds to a front end of the carbon fiber sheet 12; the second intermediate portion 1322 corresponds to a rear end of the carbon fiber sheet 12; the first distance at least partly corresponds to the lateral bending portions 122.

4. The sole structure of claim 3, wherein the lower rubber layer 133 includes a first rubber portion 1331, a second rubber portion 1332, and a third rubber portion 1333; the first rubber portion 1331 is spaced apart from the second rubber portion 1332 by a second distance; the second rubber portion 1332 is spaced from the third rubber portion 1333 by a third distance; the first rubber portion 1331 corresponds to a front portion of the first intermediate portion1321; the second rubber portion 1332 corresponds to a rear portion of the first intermediate portion 1321; the third rubber portion 1333 corresponds to the second intermediate portion 1322; the third distance corresponds to the first distance.

5. The sole structure of claim 4, wherein the second distance is less than the third distance.

6. The sole structure of claim 5, wherein the second distance substantially corresponds to a middle portion of the first intermediate portion 1321.

7. The sole structure of claim 4, wherein the first rubber portion 1331 has a first sidewall, the second rubber portion 1332 has a second sidewall, and the third rubber portion 1333 has a third sidewall.

8. The sole structure of claim 7, wherein the first sidewall extends upward from two sides of the first rubber portion 1331 and is partly connected; the second sidewall extends upward from two sides of the second rubber portion 1332 and is partly connected; the third sidewall extends upward from two sides of the third rubber portion 1333 and is partly connected.

9. The sole structure of claim 7, wherein the first sidewall at least partially covers the front portion of the first intermediate portion 1321, the second sidewall at least partially covers the rear portion of the first intermediate portion 1321, and the third sidewall at least partially covers the lateral bending portions 122 and the rear bending portion 123.

10. The sole structure of claim 1, wherein the lateral bending portions 122 substantially correspond to a middle-rear end of the midsole 11A.

11. The sole structure of claim 10, wherein the rear bending portion 123 substantially corresponds to a rear end of the midsole11A.
